Europäisches Patentamt

European Patent Office

Office européen des brevets

(11) Publication number: **0 221 623**
A2

# (12) EUROPEAN PATENT APPLICATION

(21) Application number: 86301119.3

(22) Date of filing: 18.02.86

(51) Int. Cl.⁴: **F 28 D 1/03**
F 28 F 3/14, B 60 K 11/04
F 01 P 11/10

(30) Priority: 28.10.85 US 792330

(43) Date of publication of application:
13.05.87 Bulletin 87/20

(84) Designated Contracting States:
AT BE CH DE FR GB IT LI LU NL SE

(71) Applicant: Cesaroni, Anthony J.
75 Bamburgh Circle
Scarborough Ontario M1M 3V4(CA)

(72) Inventor: Cesaroni, Anthony J.
75 Bamburgh Circle
Scarborough Ontario M1M 3V4(CA)

(74) Representative: Newby, Martin John et al,
J.Y. & G.W. Johnson Furnival House 14-18 High Holborn
London WC1V 6DE(GB)

(54) Heat exchanger.

(57) A heat exchanger, especially suited for providing the radiator in vehicle cooling systems, comprises structure defining a path for the streamline flow of a relatively large volume of air or other first fluid, a substantial part of the structure defining the path being formed by at least one thin panel extending parallel to the streamline path of the first fluid, the panel incorporating flow passages for a relatively smaller volume of a second fluid. Typically, one or more panels are mounted substantially in parallel with a vehicle surface over which streamline flow occurs, or within a fairing through which a streamline flow of air passes from an inlet to an outlet. The surfaces of the panels are preferably configured to produce micro turbulence within a boundary layer of the first fluid, without disturbing the overall streamline flow of the latter.

FIG. 4

Croydon Printing Company Ltd.

**0221623**

## Heat exchanger

This invention relates to heat exchangers, and more particularly although by no means exclusively, to heat exchangers for use in automotive applications such as radiators and oil coolers.

Liquid cooled automotive engines in vehicles normally use heat exchangers, conventionally but inappropriately termed radiators, to transfer thermal energy mainly by conduction from the coolant liquid to the ambient air in which the vehicle is operated. In order to provide a compact structure, such a radiator usually comprises a compact matrix of liquid tubes extending between headers and associated with fins to increase the heat exchange area, through which ambient air is rammed by the motion of the vehicle, a fan usually being required to supplement the ram effect when the vehicle is stationary or moving only slowly.

In the interests of improved efficiency and performance, considerable efforts have been made to reduce the air resistance of vehicles and also to reduce the energy required to drive the cooling fan, for example by the use of thermostatically controlled fans which idle except when additional airflow through the radiator is required. In racing cars, the fan may be eliminated entirely which results in overheating problems if the car engine is required to idle for any length of time. Particularly at high speeds, considerable power losses are involved merely in ramming air through the radiator core, and ducting it to and from the radiator. Unfortunately, whilst a more than proportional increase in power is required to increase air flow through a conventional radiator core, the increase in the rate of heat exchange is less than proportional. Furthermore, the rate of air flow is related to vehicle speed, not to the rate at which heat is generated by the engine. Conventional radiator design therefore involves considerable compromises. In order that a desired maximum rate of heat rejection can be obtained even at relatively low vehicle speeds, a core design is required which absorbs considerable kinetic energy from the air flow at higher speeds.

Panel type heat exchangers have long been known in which one fluid circulates through passages in a thin panel, and a second fluid flows across at least one external surface of the panel. For example, panel type hot water radiators utilized for heating buildings rely on convection of ambient air over the surfaces of the heated panel to obtain heat transfer, and panels are similarly utilized in refrigeration systems. Vehicles typically have large surface areas in contact with circulating ambient air, or in the case of boats, with the water through which the boat passes, and this has led to proposals to utilize such surfaces for heat exchange purposes.

U. S. Patent No. 1,682,204 (Wait, Jr.) shows an aircraft radiator of the skin or surface type in which the fluid passages are formed by the application of channelled strips to form headers and corrugated plates to form the cooling surface.

U. S. Patent No. 1,851,881 (Watt) discloses an arrangement having some similarities to the previous patent, although the header arrangement is quite different, and it is specifically indicated that the device can be applied to land vehicles as well as aircraft.

U. S. Patent No. 2,250,795 (Fitz Gerald et al) illustrates an automotive radiator built into the hood of a vehicle. Although surface cooling is primarily utilized, a fan and radiator grille is still retained to provide additional cooling, and it would therefore appear that the advantages of the arrangement are not fully realized.

U. S. Patent No. 2,330,632 (Seligman) shows an aircraft cooling system in which the system is arranged so as to transfer heat to the outer skin of the aircraft. However, the principal heat exchange system is arranged within the skin, and heat is transferred to the skin by conduction and forced or natural convection.

U. S. Patent No. 3,550,678 (Pfouts) discloses a further form of surface radiator including integral headers. Both sides of the unit are available for cooling by separate air flows.

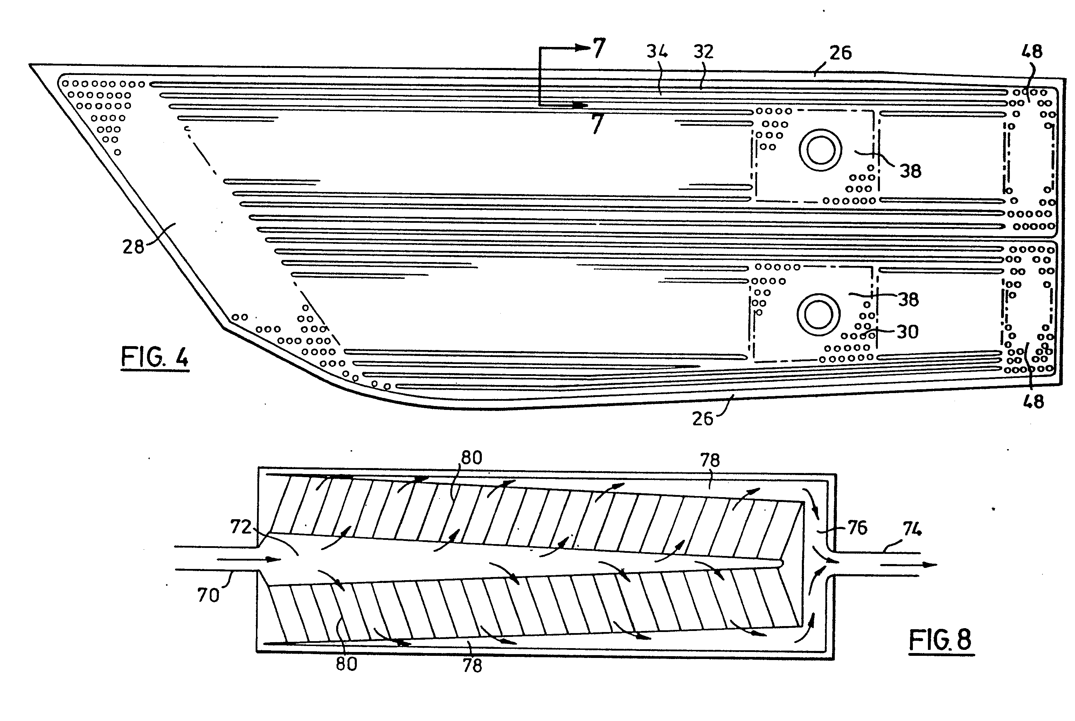

U. S. Patent No. 3,770,049 (Wright) discloses the building of vehicle radiator elements into fender surfaces of the vehicle. Figure 4 and the accompanying description at lines 12 to 23 of column 4 discloses that the radiator elements can be of laminar construction and may be positioned either adjacent to the surfaces of the fender structure or actually forming the surface of the fender structure.

U. S. Patent No. 3,812,906 (Panhard) shows an armoured vehicle utilizing surface radiators.

U. S. Patent No. 4,269,599 (Zhestkov et al) shows yet a further form of vehicle, in this case a boat, using surface cooling.

Well known racing cars which have utilized auxiliary surface radiators are the Napier-Campbell "Bluebird" of 1928, and the Brabham-Alfa BT46 of 1978. The structure of the Bluebird radiators is not readily apparent from available material but appear to involve the use of fairly conventional radiator cores, whereas the Brabham radiators were apparently small panels set into body surfaces of the car. In practical terms however, surface radiators have found very little application in vehicles.

There appear to be two main reasons for this lack of acceptance. The first is difficulty in providing suitable mounting and fender arrangements, particularly in automotive applications, where the flow of liquid content is large, the radiating surface required is large, and the radiator must be able to stand up to the wear and tear of normal use. The second problem is that unless such radiators are effectively streamlined they are likely to provide at least as much air resistance relative to their heat transfer capability as a conventional radiator, whilst on the other hand streamline flow results in reduced heat transfer efficiency because of the formation of a stagnant boundary layer of air which impedes heat transfer.

According to one aspect of the invention, and in a heat exchanger comprising at least one thin laminar element of substantial surface area located with at least one extended surface bounding a streamline flow of a first fluid, the laminar element defining internal passages for the flow of a second fluid, there is provided the improvement wherein at least the major portion of the bounding surface is textured to provide surface micro turbulence in the first fluid without disturbing overall streamline flow thereof.

According to a further aspect of the invention, in a powered vehicle utilizing coolant and/or lubricant liquid to which heat is transferred by a prime mover and/or transmission system, and means are provided to transfer heat from such a liquid to an ambient fluid in which the vehicle operates, the improvement is provided wherein the heat transfer means is at least one thin laminar element located at and substantially parallel to a portion of the structure of the vehicle past which the flow of the ambient fluid is substantially streamline, the plates being configured to maintain said streamline flow.

According to yet a further aspect of the invention, there is provided a laminar heat exchanger element for location in alignment with a streamline flow of a first fluid and defining flow passages for a second fluid, the element comprising two generally parallel sheets of thermally conductive material selectively bonded together to define a labyrinth of flow passages for the second fluid, the improvement wherein the passages extend substantially parallel between substantially linear zones in which the sheets are bonded together, said bonded zones being interrupted by a plurality of header areas, extending transversely to the passing and connecting the latter to form continuous paths for fluid between an inlet header area and an outlet header area, the sheets being locally bonded together in a plurality of spaced spots in each header area, and wherein sleeves are provided extending through the thickness of each of the inlet and outlet headers, the sleeves having peripheral apertures opening into the interiors of the header areas.

Further features of the invention will become apparent from the following description of preferred embodiments thereof with reference to the accompanying drawings, in which:

Figure 1 is a plan view of a radiator assembly for application to one side of the body of a racing car;

Figure 2 is an elevation of the same assembly;

Figure 3 is an elevational detail illustrating how the assembly is applied to the car;

Figure 4 is a plan view of one element of the radiator assembly of Figure 1;

Figure 5 is a sectional detail illustrating an inlet or outlet manifold assembly as shown in Figure 2;

Figure 6 is a sectional detail illustrating one means of forming an inlet or outlet port in the element of Figure 4;

Figure 7 is a detail showing the cross section of part of the element of Figure 4;

Figure 8 is a plan view of an alternative embodiment of radiator element;

Figure 9 is a perspective view of an alternative fin structure applied to a radiator element;

Figure 10 illustrates schematically a radiator in accordance with the invention, applied to the roof panel of a vehicle; and

Figure 11 illustrates in plan an element of an aircraft oil cooler in accordance with the invention.

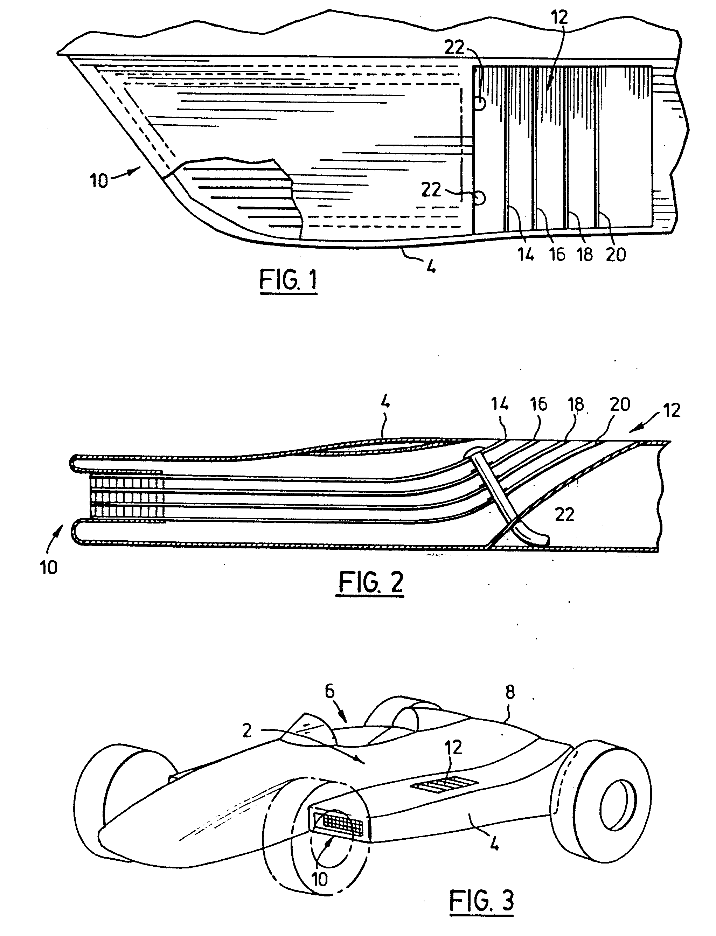

Referring to Figures 1 through 7, the automotive radiator described therein illustrates many of the principal features of the invention and although the unit described is for use in a particular form of racing car, the principles of construction and operation are applicable also to less specialized vehicles.

Referring first to Figure 3 which is a side elevation of the central portion of the body 2 of a racing car, the radiator is housed within a fairing 4 extending laterally from the body beneath a cockpit 6 and engine housing 8 of the car. The fairing has an air inlet 10 adjacent the body and rearward of a front wheel (not shown) and an outlet opening 12 in its upper surface.

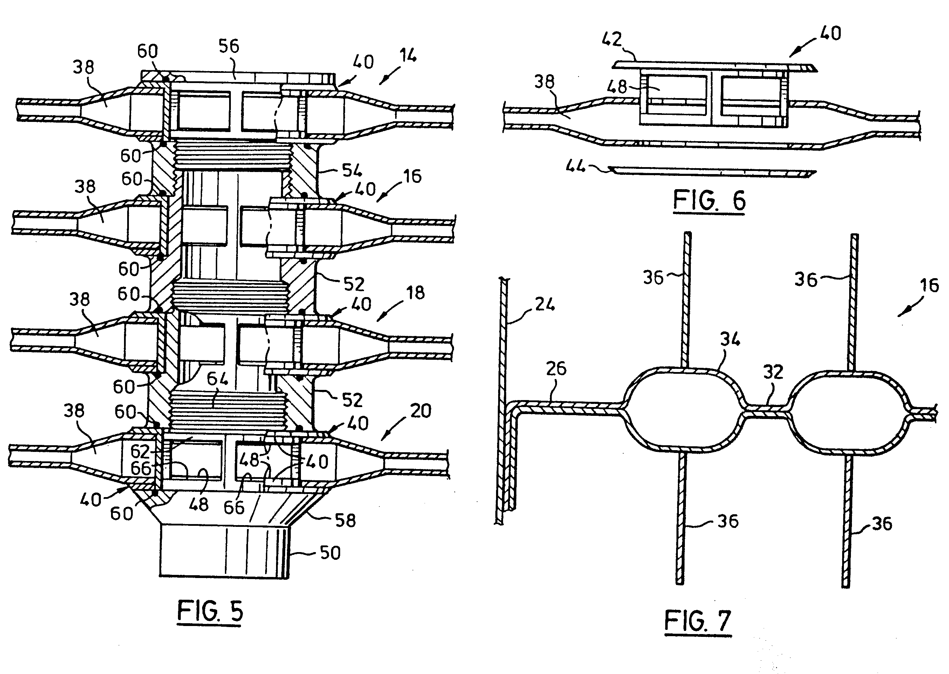

Within the fairing 4, a group of four (in this example) radiator panels 14, 16, 18 and 20 extend generally parallel to define a streamline path for the passage of air from the inlet 10 to the outlet 12. The rear portions of the panels are inclined upwardly towards the outlet. The panels are connected to common coolant inlet and outlet pipes 22 in a manner described further below and to each other by means of lateral edge plates 24 (see Figure 7).

The structure of the individual panels will be more apparent from Figure 4, which is a plan view of the panel 20. The panel itself is of laminar structure, being formed in the example shown of roll-bonded aluminum. In the roll bonding process at least one of two thin sheets of metal, in this case aluminum is locally coated with a stop-weld coating material, typically graphite, in a predetermined pattern, and the two sheets are then rolled together under heat and pressure so as to weld their adjacent surfaces together except where stop-weld coating has been applied. The unwelded areas are then separate to form channels by the introduction of high pressure fluid between the sheets whilst confining the outer surfaces of the latter. It will be appreciated that by applying the stop-weld material in a suitable pattern between the sheets, any desired configuration of fluid passages may be formed within the panel. Somewhat similar techniques may be utilized to form panels by bonding or welding sheets of synthetic plastic material having suitable tensile strength at anticipated coolant temperatures.

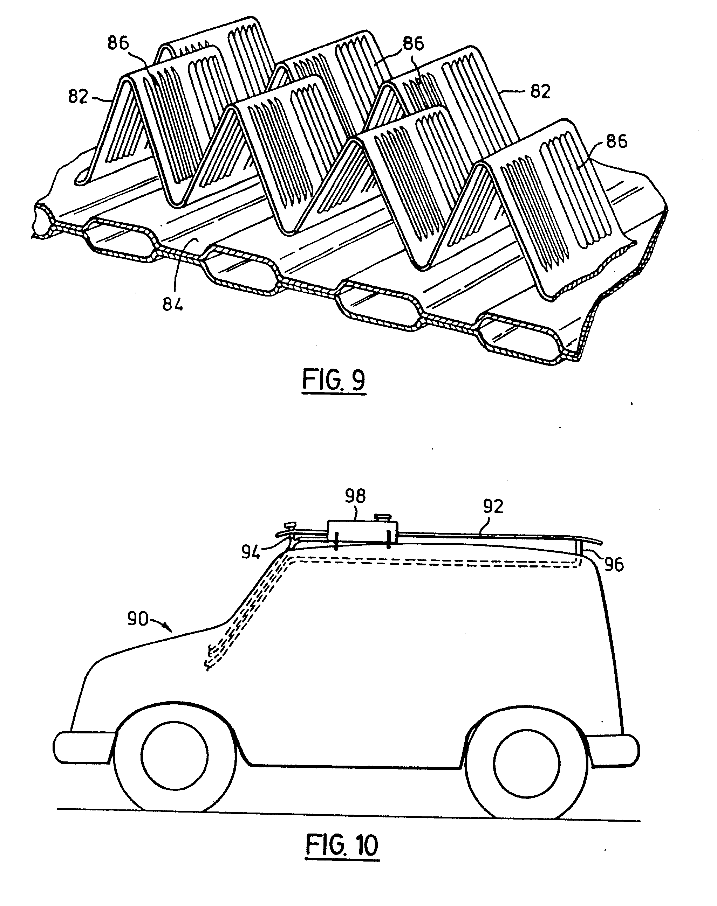

In the example shown in Figure 4, the panel has three principal classes of zone, namely an edge zone 26 in which the sheets are continuously welded together, header zones 28, 38, 48 in which the sheets are spot welded together in a pattern of distributed locations 30, and passage zones in which the sheets are welded together in zones 32 extending generally parallel to the direction of air flow over the panels so as to form fluid passages 34 extending between the header areas. Fins 36 may be provided extending the length of the passages 34, as best seen in Figure 7, and these fins may advantageously be louvered, in similar manner to the fins shown in Figure 8 , and discussed further below.

As mentioned above, boundary layer conditions present a problem in heat exchanger elements in which a fluid exhibits streamline flow, as in the present example. In order to overcome this problem, the external surfaces of the radiator elements 14, 16, 18 and 20 are configured to create micro turbulence in the boundary layer, without disturbing the overall streamline flow through the system. One such surface configuration is the louvering of the fins discussed above, but numerous other means are possible for providing micro turbulence at the panel surface. It should be noted that since the panels utilized in the present invention typically present a substantial surface area in which the fluids between which heat is being exchanged are separated only by the thickness of the panel material, the heat conductivity of the material used to form the panel is much less critical than in conventional radiators, wherein the bulk of heat transfer takes place via fins and similar structures which provide most of the heat transfer surface. This has effectively restricted available materials for such conventional readiators to aluminum and copper where high rates of heat transfer are required. With radiator panels of the type contemplated in the present invention, boundary layer effects are much more significant than the thermal resistance of a thin layer of material such as synthetic plastic having a much lower conductivity than aluminum or copper.

In order to reduce boundary layer effects, the heat transfer surfaces of the panels are surface treated to provide micro turbulence. This may be achieved in various ways, essentially by providing a distribution of irreguarities on surfaces extending parallel to a streamline flow of fluid such as air, such as to provide micro turbulence at the surface which prevents stagnancy of the boundary layer and extends the heat exchange surface. Typically the irregularities have dimensions of 0.25 to 5 millimetres depending on their nature, distribution and configuration, the objective being to maintain micro turbulence in the boundary layer without breaking up an overall streamline flow across the panel. The irregularities may be achieved by milling or knurling the external surfaces of the material used to form the panel, or by applying rough and porous coatings to the material. Suitable coatings are low contact conductance coatings developed for surfaces of aerospace vehicles required to dissipate considerable heat. Such coating have the further advantage when utilized on external surfaces of a vehicle of being efficient dissipators of heat by radiation. Suitable coatings may also be obtained by growing or adhering crystalline material such as metal oxide crystals of suitable dimensions on the panel surfaces. With panels formed of synthetic plastics material, appropriate solvents may be used either to roughen the panel surfaces directly, or to soften them so as to provide adherence of a surface coating.

Fins such as the fins 36 must be of highly conductive material if they are significantly to increase heat transfer area of the panel. Regardless of their conductance they provide a further function, provided that they are configured to provide surface micro turbulence, by assisting in exchanging fluid between the streamline flow across the panel, and the micro turbulent boundary layer, as well as assisting in stiffening the panel and guiding and preventing break-up of the streamline flow through the assembly.

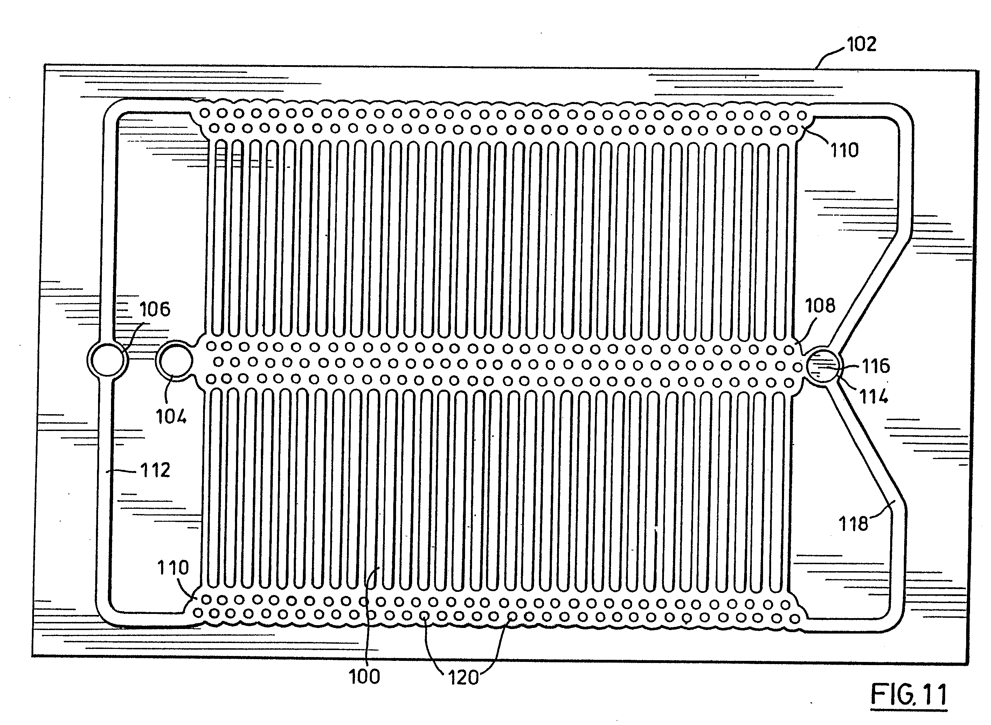

The configuration of the panel itself may provide micro turbulence. In a roll bonded panel such as that just described, the fluid passages 34 and zones 32 extend parallel to the direction of air flow past the panels, and therefore their configuration does not interfere with , normal streamline flow. However, fluid passages extending transversely to the flow of a high velocity air stream, as in the case of the passages 80 or 100 in the embodiments of Figures 8 and 11 described below  when the panel is roll formed, and operated end on to the air stream, will present small steps in the profile of the external surfaces of the panel which result in the generation of micro turbulence in a high speed air flow over the panel, and the same applies to the locations 30 in the present embodiment, although only the header zones will be affected in this case.

The assembly shown in Figure 1 through 7 is assembled by means of the edge flanges 24, which may be formed integrally with the panels by folding an edge zone of the panel through 90° in one direction and then back through 180° to form the double flanges, and by the inlet and outlet pipes 22.

The formation of the portions of these pipes associated with the panels, and the associated headers on the panels, is best seen in Figure 5 and Figure 6.  Referring first to Figure 6, tubular sleeves 40 are inserted into circular openings in the panels 14-20.  As shown, the sleeves have a peripheral flange 42 at one end which is bonded by welding, soldering or adhesives to one face of the panel, the other end of the sleeve being bonded to a separately formed flange 44 bonded to the opposite surface of the panel.  Typically, bonding may be achieved by use of structural epoxy adhesives.  Alternatively, one piece sleeves may be welded directly into the panel.  The sleeves 40 have parts 48 in the plenums 38.

Referring now to Figure 5, the end portion of each pipe 22 is formed by a series of coacting fittings, namely an inlet/outlet fitting 50, spacer fittings 52 and 54, and an end cap 56. The fitting 50 has a socket for connection to the remainder of the pipe 22, a flange 58 supporting an O-ring 60 and forming a liquid tight seal with the lower flange associated with a sleeve 40 on panel 20. A sleeve 62 with ports 66 extends through the sleeve 40 to an end portion 64 threaded for engagement with a spacer 52. The fitting 50 can be rotated within the sleeve 40 so as to adjust the degree of coincidence between the ports 48 and 66, and thus control the proportion of liquid flowing to or from the panel 20.

The spacers 52 which pass through the sleeves 40 of the panels 18 and 16 are constructed and installed similarly to the fitting 50, except that they are threaded to engage the end portion 64 of the fitting 50 or another spacer 52, and have a lower flange 68 supporting an O-ring 60 for sealing engagement with the upper surface of the panel 20 or 18 as the case may be. The spacer 54 is simply a spacer between the panels 14 and 16 with upper and lower flanges supporting O-rings, and threaded sockets for engagement with a spacer 52 and the end cap 56. The end caps 56 close the tops of the sleeves 40 in the panel 14 and have ported sleeves passing through those sleeves to a lower end in threaded engagement with the adjacent spacer 54.

By this arrangement, a strong and rigid connection is made between the pipes 22 and the header 38 in a manner which allows the transfer of high volumes of liquid and permits balancing of the flow between the various panels by rotation of the sleeves 62 within the sleeves 40. It will of course be appreciated that the actual arrangement of the fittings could be different; for example, both the fitting 50 and all the spacers could be formed by spacers 52 in conjunction with a single blind end cap with a flange replacing the end cap 56.

It will of course be understood that in installing the
above radiator, the fairing 4 and the inlet and outlet 10 ,
and 12 are arranged so that streamline air flow is maintained through the assembly over the normal range of operating speeds of the vehicles which extend in the case being considered to well above 300 km/hr.  Based upon wind
tunnel tests upon individual panels using various rates
of air and water flow, it is calculated that a radiator
constructed and installed as described above, should produce an air pressure drop across the radiator of less
than one inch of water at a vehicle speed of 200 miles
per hours, and less than 3/4 inch of water at 140 miles
per house, whereas a conventional radiator designed for
a similar vehicle is calculated, on the basis of wind
tunnel tests, to produce a pressure drop of about 8.5
inches of water when the vehicle is travelling at 140
miles per hour,  and about 12 inches of water when the
vehicle is running at 200 miles per hour.  These latter
pressure drops correspond, with a radiator of the dimensions concerned, to a power loss of about 22 HP at 200
mph and 8 HP at 140 mph.  It should be noted that these
figures are calculated on the basis that the actual velocity of air flow through a conventional radiator core is
much less than the vehicle speed, as will normally be the
case.  In this case it has been assumed that the air velocity through the core is about 25% of that of the vehicle
itself.  This contrasts with the present invention, in
which the air flow is essentially at the same speed as
the vehicle.  Indeed, it is possible by suitably configuring air gaps between the panels, or between the panels
and surrounding surfaces, or by varying the width of the
panels,  to accelerate the air flow over the panel surfaces using venturi effects, thus further improving the
heat transfer rate and facilitating maintenance of streamline flow conditions at the exit from a radiator assembly.
In effect, the panels of the radiator of the present
invention can be configured to form part of a streamline air passage through or over the vehicle which will present minimal drag and can be integrated into the aerodynamics , of the vehicle as a whole.

Figure 8 shows an alternative embodiment of heat exchanger panel designed to provide an improved rate of heat exchange where there is a substantial temperature difference between the ambient fluid, usually air, and the fluid passed through the panel. An inlet connection 70 at one end of the panel communicates with a longitudinal central tapering plenum 72, whilst an outlet connection 74 at the other end of the panel communicates with a plenum 76 having tapering branches 78 adjacent the longitudinal edges of the plenum, fluid passages 80 arranged in a herringbone formation between the plenums. The panel may be roll formed or otherwise manufactured as previously described, with local spot connections in the plenum areas between the two sheets forming the panels, as in the first embodiment, so as to avoid possible "ballooning" of the plenums under pressure.

Figure 9 illustrates a further arrangement for applying fins 82 to a panel 84 so as to improve functionality of the panel by extendings its heat exchange and/or exchanging air between a micro turbulent boundary layer and an overall streamline air flow in which the panel is placed. The fins 82 are formed from strips of metal such as aluminum bent into zig-zag formations and secured to the panel surface so that the strips are edge-ways to the direction of air flow. The strips themselves are formed with panels 86 of miniature louvres, which divert boundary layers of air through the strips and thus create micro turbulence in those layers.

Figure 10 diagrammatically illustrates the application of a heat exchanger in accordance with the invention as the radiator for a road vehicle, in this example a small van

- 14 -

0221623

or stationwagon 90. A panel 92 essentially similar to that already described with reference to Figure 4 but having inlet and outlet connections 94, 96 at opposite ends and an area of about 1500 square feet, together with a header tank 98 connected to the inlet 94, was mounted on the roof of a Chrysler CARAVAN (Trade Mark) passenger van, supported by an existing roof rack, and connected to flexible hoses to the inlet and outlet hoses of the conventional radiator, stop cocks (not shown) being provided in an arrangement enabling coolant flow to be diverted through either radiator. The panel, which was coated with a rough, porous coating, provided satisfactory cooling performance during more than 2000 km of varying city and highway driving conditions.

Whilst the invention has been described primarily in relation to air-cooled radiators for vehicle engine coolant liquid, the same principles are also applicable to other vehicle applications such as oil and transmission fluid coolers, liquid cooled heat exchangers for application for example to the hulls of boats, and to industrial heat exchangers, wherever it is desired to exchange heat between a relatively low volume of one fluid, generally a liquid, and a high volume of stream flow of another fluid, generally a gas such as air, without substantially disturbing or impeding the flow of the latter. Moreover, whilst the invention has been described in relation to embodiments in which the heat exchange panels are more or less parallel to each other, as in Figures 1 through 7, or to another bounding surface, as in Figure 10, other configurations would be possible provided that streamline flow can be maintained. For example, a panel could be rolled into a spiral, with the gas flowing parallel to the spiral axis.

An example of the application of the invention to an aircraft oil cooler is illustrated in Figure 11. Such oil coolers present a problem in implementation in that, besides the air resistance penalties exacted by conventional heat exchangers utilized for the purpose, the wide range of viscosities encountered at different oil temperatures presents problems in avoiding excessive oil pressure drops across the heat exchanger and undesirable restriction of oil flow. Threse problems usually entail the use of some form of valve arrangement to bypass the radiator during a warm up period but with such bypass valves it is difficult to secure a sufficient oil flow through the heat exchanger to raise it to a temperature at which the oil can flow freely. The panel shown in Figure 10 enables these problems to be alleviated by providing alternative flow paths for the oil through the panel according to oil temperature. The panel 102 is formed by roll bonding in a similar manner to those already described, with ported cylindrical inlet and outlet fittings 104, 106 similar to those already described, inlet and outlet headers 108 and 110 connected to each other by header passages 100. The outlet headers 110 are connected by passages 112, similarly formed but of substantially larger dimensions than the passages 100, to the outlet fitting 106, and at their other ends by further similar passages 118 to a cylindrical ported fitting 114, at the opposite end of the inlet header 108 from the inlet fitting 104. A valve plug 116, movable axially (or alternatively rotationally), preferably in response to oil temperature and/or pressure, controls the flow of oil through the passages 118.

When the oil is cold, plug 116 is controlled so as to permit free flow through the passages 118. Thus the path for the oil provided by the passages 100 is supplemented by the passages 118 which provide an alternative, relatively unrestricted path for the oil which bypasses the passages 100 yet passes through the headers 108 and 110, and the passages 112 and 118. This makes available the thermal energy from the oil as it warms up to bring the panel to working temperature, without unduly raising the pressure drop across the panel or restricting the oil flow. As the oil temperature rises, the valve plug 116 can be moved to divert more of the oil flow through the passages 100 and increase the heat exchange capacity of the panel. Panels such as panel 100 may be assembled in parallel in a suitable fairing, as in the embodiment of Figures 1-4, and similar surface treatments may be applied. The transverse passages 100, 112 and 118, and islands 120 in the headers, will also cause micro turbulence in the streamline air stream passing longitudinally over the panel when the latter is travelling at sufficient speed.

Provided that the panels are arranged so as to permit convection when the vehicle to which they are fitted is stationary, or the normal streamline air flow over the panels is otherwise interrupted, a significant measure of cooling will still be obtained, and therefore an auxiliary fan will not normally be required. So far as the coolant or other fluid passing through the panels is concerned, there is no problem in designing the panels for an adequate coolant flow with pressure drops at least as low as those encountered in conventional radiators of comparable heat transfer capability.

0221623

CLAIMS:

1. A heat exchanger comprising at least one thin laminar element of substantial surface area located with at least one extended surface boundary in contact with a streamline flow of a first fluid, the laminar element defining internal passages for the flow of a second fluid, characterized in that at least a substantial portion of the boundary surface of the laminar element (14, 16, 18, 20, 84, 92) is configured with minor surface discontinuities (30,36, 82, 86) sufficient to provide surface micro turbulence in the first fluid whilst maintaining overall streamline flow thereof.

2. A heat exchanger according to Claim 1, characterized in that the surface is textured by the application of a rough porous layer.

3. A heat exchanger according to Claim 2, characterized in ther the layer is of a glass-ceramic coating of low contact conductance.

4. A heat exchanger according to Claim 1, characterized in that the surface is textured by knurling or milling.

5. A heat exchanger according to Claim 1, characterized in that the surface is textured by irregularities having dimensions of 0.25 to 5 mm.

6. A heat exchanger according to Claim 5, characterized in that the surface is textured with external fins (36), located edgewise on the direction of flow of the first fluid, and configured to provide micro turbulence in a boundary layer of the first fluid.

7. A heat exchanger according to any of Claims 1 to 6, characterized in that the element comprises two generally parallel sheets of thermally conductive material selectively bonded together to define a labyrinth of flow passages (34) for the second fluid, wherein the passages extend substantially parallel between substantially linear zones (32) in which the sheets are bonded together, said bonded zones (32) being interrupted by a plurality of header areas (38, 38, 48), extending transversely to the passages and connecting the latter to form continuous paths for fluid between an inlet header area and an outlet header area, the sheets being locally bonded together in a plurality of spaced spots (30) in each header area, and wherein sleeves (40) are provided extending through the thickness of each of the inlet and outlet headers (38), the sleeves having peripheral apertures (48) opening into the interiors of the headers areas.

8. A heat exchanger system comprising at least one element according to Claim 7, characterized in that inlet and outlet pipes (22) extend through said sleeves (40) and are secured thereto in fluid tight relationship.

9. A heat exchanger system according to Claim 8, having multiple element, characterized in that said sleeves are ported and said pipes (22) include ported sleeves (62) which latter are rotatable relative to the sleeves (40) in the headers to balance the flow through the individual elements.

10. A heat exchanger system according to Claim 7, 8 or 9, having multiple elements, characterized in that the elements are maintained in spaced relationship by longitudinal edge flanges (24) extending perpendicular to the general plane of the elements.

11. A heat exchanger system according to any of Claims 1-10, characterized in that the internal passages define at least two alternative paths (100,118) for passage of said second fluid through the panel, and that valve means (116) are provided for diverting flow of said second fluid between said paths.

12. A heat exchanger system according to Claim 11, characterized in that the valve means (116) are provided in one of said paths (118) which provides a relatively unrestricted path for fluid between inlet and outlet headers (108,110) when the valve means is open.

13. A powered vehicle utilizing a liquid to which heat is transferred by a power train system, and wherein a heat exchanger according to any of Claims 1 to 10 is provided to transfer heat from such a liquid to an ambient fluid in which the vehicle operates; characterized in that the heat transfer means is at least one thin laminar element (92) located adjacent and substantially parallel to a portion of the structure of the vehicle (40) past which the flow of the ambient fluid is substantially streamline, the at least one laminar element being configured to maintain said streamline flow, the laminar element being configured to provide micro turbulence of a boundary layer of the ambient fluid without disrupting overall streamline flow of the fluid.

14. A vehicle according to Claim 13, characterized in that the portion of the vehicle is a side of the vehicle, a roof panel or a fairing.

1/5

0221623

FIG. 1

FIG. 2

FIG. 3

FIG. 4

7 34 32 26 48

28

38

38

30

26 48

FIG. 8

80 78

72 76 74

70

80 78

2/5

0221623

FIG. 9

FIG. 10

0221623

FIG.11